# EUROPÄISCHE PATENTSCHRIFT

(11) **EP 0 522 353 B1**
(45) Veröffentlichungstag und Bekanntmachung des Hinweises auf die Patenterteilung: **04.11.1998**
(21) Anmeldenummer: 92110620.9
(22) Anmeldetag: 24.06.1992
(51) Int. Cl.: F16B 37/00, F16B 5/02

(54) **Pfosten-Schild-Vorrichtung**
Stake-signboard-support
Support d'une plaque à un poinçon

(30) Priorität: 26.06.1991 DE 4121078
(43) Veröffentlichungstag der Anmeldung: 13.01.1993
(73) Patentinhaber: Franken Plastik GmbH, D-90763 Fürth (DE)
(72) Erfinder: Frick, Günter, W-8510 Fürth (DE)
(74) Vertreter: Böhme, Volker, Dipl.-Ing.

(56) Entgegenhaltungen:
- DE-A- 1 775 811
- FR-A- 1 394 162
- GB-A- 2 186 938
- US-A- 2 682 322
- US-A- 4 927 308
- Prospektblatt "Pfosten + Zubehör von FP",Milton Bradley GmbH

## Beschreibung

Die Erfindung betrifft eine Pfosten-Schild-Vorrichtung gemäß Oberbegriff des Patentanspruchs 1.

Bei einer bekannten (Prospektblatt "Pfosten + Zubehör von FP" der Milton Bradley GmbH) Vorrichtung dieser Art, ist ein als Flachteil vorgesehenes Schild an einem als Profilträger vorgesehenen Pfosten befestigt. Bei der Außenseite des Profilträgers sind an den Rinnenwänden simsartige Vorsprünge vorgesehen, welche die Breite der Nutrinne verringern. Der Abstand der Rinnenwände ist auf die Abmessungen einer in die Nutrinne eingeschobenen Mutter abgestimmt. Die Befestigungsschraube ist als Zylinderschraube ausgebildet, deren Gewinde in das Innengewinde der Mutter geschraubt wird. Diese Vorrichtung zur Schraubbefestigung ist nachteilig, weil die Mutter in die Nutrinne eingeführt werden muß. Sind an dem Profilträger zwei solcher Befestigungen hintereinander vorgesehen und will man das Flachteil der inneren Befestigung entfernen, so muß auch die äußere Befestigung gelöst und das äußere Flachteil abgezogen werden. Die Mutter ist ein zusätzliches Teil und stellt einen zusätzlichen Montageaufwand dar.

Es ist auch eine Vorrichtung zur Befestigung einer Schildplatte bekannt (GB-A-2 186 938), bei der ein U-förmiges, mit Längsrillen zur Aufnahme der Gewindegänge von Schrauben versehenes Hohlprofil vorgesehen ist. Dieses Hohlprofil wird mittels Rohrschellen an einem Hohlprofilpfosten befestigt.

Eine Aufgabe der Erfindung ist es daher, eine Vorrichtung der eingangs genannten Art zu schaffen, die weniger aufwendig und vereinfacht zu montieren ist. Die erfindungsgemäße Vorrichtung weist, diese Aufgabe lösend, die Kennzeichnenden Merkmale des Patenstanspruchs 1 auf.

Diese Vorrichtung ist durch den Wegfall der Mutter weniger aufwendig; auch ist sie erheblich vereinfacht zu montieren, weil die Blechtreibschraube an jeder beliebigen Stelle entlang der Nutrinne in diese getrieben und wieder herausgeschraubt werden kann. Die Rinnenwände übernehmen die Funktion eines Gegenstückes der Blechtreibschraube.

Der Hohlprofilpfosten besteht aus einer Aluminiumlegierung, wie z. B. AlMgSI. Der Gewindegang der Blechtreibschraube drückt sich in das Material des Hohlprofilpfostens ein. Der Hohlprofilpfosten ist in der Regel durch Extrudieren hergestellt, also gezogen oder stranggepreßt. Die Blechtreibschraube hat z. B. einen ununterbrochen durchgehenden Gewindegang, der nur drückende Wirkung hat. Es ist aber auch möglich, am vorderen Ende eine Nutung vorzusehen, so daß auch eine schneidende Wirkung vorliegt.

Die Gewindegänge der Blechtreibschraube drücken sich in das Material des Hohlprofilpfostens ein. Besonders zweckmäßig und vorteilhaft ist es, daß an einer Rinnenwand längsverlaufende, zueinander parallele Rillen vorgesehen sind, deren Abstand voneinander gleich der ganzen Ganghöhe des Gewindes der Blechtreibschraube ist und in welche der Gewindegang der Blechtreibschraube eingreift. Dies vereinfacht das Eintreiben der Blechtreibschraube, weil diese nur jeweils zwischen zwei benachbarten Rillen Pfosten-Material zu verdrängen hat. Diese Rillen lassen sich bei der Herstellung des Hohlprofilpfostens einfach vorsehen, wenn dieser durch Ziehen hergestellt wird.

Besonders zweckmäßig und vorteilhaft ist es dabei, wenn an beiden Rinnenwänden Rillen vorgesehen sind und die Rillen beider Rinnenwände gegeneinander um die halbe Ganghöhe des Gewindes der Blechtreibschraube versetzt sind. Hierdurch wird das Eintreiben der Blechtreibschraube kräftemäßig weiter vereinfacht, ohne den festen Sitz der eingetriebenen Blechtreibschraube zu beeinträchtigen.

Besonders zweckmäßig und vorteilhaft ist es sodann, wenn der Querschnitt der Rille sich zu deren Grund hin angepaßt an den Querschnitt des Gewindeganges der Blechtreibschraube keilförmig verringert. Dies führt zu einer weiteren Vereinfachung des Eintreibens der Blechtreibschraube.

Es sind pro Schildplatte zwei Blechtreibschrauben vorgesehen. Die Schildplatte besteht aus Metall oder Kunststoff. Der Hohlprofilpfosten weist z. B. nur eine einzige Nutrinne oder auch zwei und mehr Nutrinnen auf, die mit Abstand vorneinander vorgesehen sind und erfindungsgemäß gestaltet sind.

Die Blechtreibschraube ist eine gewindedrückende Schraube, besteht in der Regel aus Stahl und weist ein spitzes Schaftende auf. Besonders zweckmäßig und vorteilhaft ist, wenn - in Längsrichtung des Schaftes der Blechtreibschraube gesehen - deren Gewindegang an mindestens drei Stellen, z. B. an vier Stellen, in die eine Rinnenwand eingreift. Dies verbessert den festen Halt der Schildplatte am Hohlprofilpfosten.

Der Sitz der Blechtreibschraube ist nicht von einer elastischen Biegung der Rinnenwände abhängig, die vielmehr biegefest sind. Diese Biegefestigkeit ist z. B. gegeben, indem die Nutrinnenwand an der der Rinne abgewandten Seite entsprechend dick oder versteift ist. Da der Hohlprofilpfosten hohl ist, sind die Rinnenwände in der Regel unverdickte und unversteifte Schenkelstreifen, deren von der Pfostenaußenseite fernen Enden durch einen Quersteg miteinander verbunden sind.

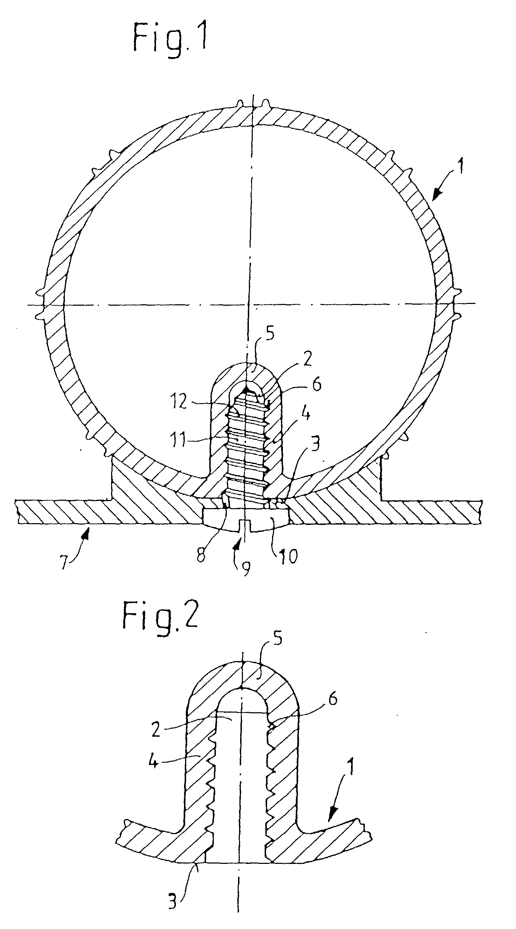

In der Zeichnung ist eine bevorzugte Ausführungsform der Erfindung dargestellt und zeigt
- Fig. 1: einen Querschnitt einer Vorrichtung zur Schraubbefestigung an einem Hohlprofilpfosten und
- Fig. 2: einen Ausschnitt der Darstellung in Fig. 1 in einem gegenüber Fig. 1 vergrößerten Maßstab.

Die Vorrichtung gemäß Zeichnung weist einen Hohlprofilpfosten 1 aus Aluminiumlegierung auf, der hohl ist, im Querschnitt im wesentlichen Kreis rund ist und als Pfosten ausgebildet ist. Es ist eine längsverlaufende Nutrinne 2 vorgesehen, die zur Außenseite 3 hin offen ist und deren Breite von der Außenseite bis zum Grund gleichbleibend ist. Die beiden Rinnenwände 4 sind Schenkelstreifen, die durch einen Quersteg 5 miteinander verbunden sind. Beide Rinnenwände 4 sind mit fünf bzw. sechs längsverlaufenden Rillen 6 versehen, die im Querschnitt dreieckig sind. An dem Hohlprofilpfosten 1 ist bei der Nutrinne 2 eine Schildplatte 7 angelegt, die einen lochartigen Durchbruch 8 aufweist. Eine Blechtreibschraube 9 liegt mit dem Kopf 10 an der Schildplatte 7 an und ist mit dem Schaft 11 durch den Durchbruch 8 gesteckt sowie mit dem Schaft 11 in die Nutrinne 2 geschraubt. Ein am Schaft 11 vorgesehener Gewindegang 12 greift in die Rillen 6 ein. Der Schaft 11 weist über die Länge, abgesehen von der Spitze, gleichbleibenden Durchmesser auf.

## Patentansprüche

1. Pfosten-Schild-Vorrichtung,
bei der eine durchbohrte Schildplatte (7) an einem Hohlprofilpfosten (1) aus Aluminium durch zwei Befesfigungsschrauben (9) befestigt ist,
bei der der Hohlprofilpfosten mit einer längsverlaufenden Nutrinne (2) versehen ist, die von zwei einander gegenüberliegenden biegefesten Aluminium-Rinnenwänden (4) begrenzt ist, und
bei der jede der einen Kopf (10) und einen mit Gewinde versehenen Schaft (11) aufweisenden Befestigungsschrauben mit dem Kopf außen an der, am Hohlprofil abgestützten Schildplatte abgestützt ist, und mit dem Schaft die Schildplatte durchdringt und in die Nutrinne ragt,
wobei der Schaft (11) mittels des Gewindes in der Nutrinne (2) eingeschraubt und gehalten ist,
dadurch gekennzeichnet,
daß die Rinnenwände (4) bis zur Außenseite (3) des Hohlprofilpfostens (1) vorsprungsfrei durchgehen und in ihrem Abstand voneinender auf die Dicke des Schaftes (11) abgestimmt sind,
daß an mindestens einer Rinnenwand (4) längersverlaufende, zueinander parallele Rillen (6) vorgesehen sind, deren Abstand voneinander gleich der ganzen Ganghöhe des Gewindes (12) der Befestigungsschraube (9) ist und in welche der Gewindegang der Befestigungsschrauben eingreift,
daß die die Schildplatte (7) durchdringenden Befestigungsschrauben (9) beide in die Rillen (8) der Rinnenwände (4) des Hohlprofilpfostens (1) geschraubt sind, und
daß die Befestigungsschraube als Blechtreibschraube (9) ausgebildet ist, deren Gewinde (12) in die Rinnenwände (4) bzw. die Rillen (6) eingreift.

2. Pfosten-Schild-Vorrichtung nach Anspruch 1, dadurch gekennzeichnet, daß an beiden Rinnenwänden (4) Rillen (6) vorgesehen sind und die Rillen beider Rinnenwände gegeneinander um die halbe Ganghöhe des Gewindes (12) der Befestigungsschraube (9) versetzt sind.

3. Pfosten-Schild-Vorrichtung nach Anspruch 1 oder 2, dadurch gekennzeichnet, daß der Querschnitt der Rille (6) sich zu deren Grund hin angepaßt an den Querschnitt des Gewindeganges (12) der Befestigungsschraube (9) keilförmig verringert.

4. Pfosten-Schild-Vorrichtung nach Einem der vorhergehenden Ansprüche, dadurch gekennzeichnet, daß - in Längsrichtung des Schaftes (11) der Befestigungsschraube (9) gesehen - deren Gewindegang (12) an mindestens drei Stellen, z.B. an vier Stellen, in die eine Rinnenwand (4) eingreift.

## Claims

1. A post-and-signboard device, wherein a drilled-through signboard (7) is fixed to a hollow-section aluminium post (1) by means of two fastening screws (9), wherein the hollow-section post is provided with a longitudinally extending channel (2) bounded by two opposing, rigid, aluminium channel walls (4), and wherein each of the fastening screws comprises a head (10) and a threaded shaft (11), the head resting against the outside of the signboard supported on the hollow-section post, and the shaft extending through the signboard and projecting into the channel, the shaft (11) being screwed into and held in the channel (2) by means of the thread, characterised in that the channel walls (4) extend as far as the outside (3) of the hollow-section post (1) in a projection-free manner and their mutual distance is adapted to the thickness of the shaft (11), in that at least one channel wall (4) is provided with longitudinally extending, parallel grooves (6), the mutual distance of which is equal to the full pitch of the thread (12) of the fastening screw (9), and in which the thread of the fastening screws engages, in that the fastening screws (9), extending through the signboard (7), are both screwed into the grooves (6) of the channel walls (4) of the hollow-section post (1), and in that the fastening screw is formed as a self-tapping screw (9), the thread (12) of which engages in the channel walls (4) or the grooves (6).

2. A post-and-signboard device according to claim 1, characterised in that grooves (6) are provided on both channel walls (4), and the grooves of the two channel walls are mutually offset by half the pitch of the thread (12) of the fastening screw (9).

3. A post-and-signboard device according to claim 1 or 2, characterised in that the cross-section of the groove (6) narrows towards its base in the manner of a wedge so as to conform to the cross-section of the thread (12) of the fastening screw (9).

4. A post-and-signboard device according to any one of the preceding claims, characterised in that, when viewed in the longitudinal direction of the shaft (11) of the fastening screw (9), the thread (12) thereof engages in one channel wall (4) at at least three points, e.g. at four points.

## Revendications

1. Dispositif à plaque et poteau, dans lequel
- une plaque percée (7) est fixée sur un poteau profilé creux (1) en aluminium par deux vis de fixation (9),
- le poteau profilé creux est pourvu d'une gorge longitudinale (2) délimitée par deux parois de gorge en aluminium (4) résistantes à la flexion et situées en vis-à-vis l'une de l'autre, et
- chacune des vis de fixation, présentant une tête (10) et une tige (11) pourvue d'un filetage, est appuyée par la tête à l'extérieur contre la plaque supportée sur le profilé creux, et traverse par la tige la plaque et pénètre dans la gorge,
la tige (11) étant vissée et retenue au moyen du filetage dans la gorge (2),
caractérisé en ce que
- les parois de gorge (4) s'étendent en continu sans saillie jusqu'à la face extérieure (3) du poteau profilé creux (1) et sont adaptées quant à leur distance mutuelle à l'épaisseur de la tige (11),
- sur au moins une paroi de gorge (4) sont prévues des rainures longitudinales (6) parallèles les unes aux autres dont la distance mutuelle est égale à un pas entier du filetage (12) de la vis de fixation (9) et dans lesquelles s'engage le filetage des vis de fixation,
- les vis de fixation (9) traversant la plaque (7) sont vissées toutes les deux dans les rainures (6) des parois de gorge (4) du poteau profilé creux (1), et en ce que
- la vis de fixation est réalisée sous forme d'une vis Parker (9) dont le filetage (12) mord dans les parois de gorge (4) ou dans les rainures (6).

2. Dispositif à plaque et poteau selon la revendication 1, caractérisé en ce que sur les deux parois de gorge (4) sont prévues des rainures (6), et en ce que les rainures des deux parois de gorge sont décalées les unes par rapport aux autres de la moitié du pas du filetage (12) de la vis de fixation (9).

3. Dispositif à plaque et poteau selon l'une ou l'autre des revendications 1 et 2, caractérisé en ce que la section transversale de la rainure (6) se réduit en forme de coin vers son fond en étant adaptée à la section transversale du filetage (12) de la vis de fixation (9).

4. Dispositif à plaque et poteau selon l'une quelconque des revendications précédentes, caractérisé en ce que, vu en direction longitudinale de la tige (11) de la vis de fixation (9), son filetage (12) s'engage à au moins trois emplacements, par exemple à quatre emplacements, dans l'une des parois de gorge (4).
